# EUROPEAN PATENT SPECIFICATION

(11) **EP 1 303 963 B1**
(45) Date of publication and mention of the grant of the patent: **27.12.2006**
(21) Application number: 00956335.4
(22) Date of filing: 27.07.2000
(51) Int. Cl.: H04L 29/06, H04Q 7/38

(54) **A METHOD FOR HEADER COMPRESSION CONTEXT CONTROL DURING HANDOVER IN MOBILE DATA COMMUNICATION NETWORKS**
VERFAHREN ZUR STEUERUNG VON HEADERKOMPRESSION WÄHREND EINES WEITERREICHENS IN MOBILDATENKOMMUNIKATIONSNETZWERKEN
PROCEDE DE COMMANDE D'UN CONTEXTE DE COMPRESSION D'EN-TETE LORS D'UN TRANSFERT DANS DES RESEAUX MOBILES DE TRANSMISSION DE DONNEES

(43) Date of publication of application: 23.04.2003
(73) Proprietor: TELEFONAKTIEBOLAGET LM ERICSSON (publ), 164 83 Stockholm (SE)
(72) Inventor: KARAGIANNIS, Georgios, D-7161 PJ Neede (NL)
(74) Representative: Dohmen, Johannes Maria Gerardus
(86) International application number: PCT/EP2000/007287
(87) International publication number: WO 2002/011397

(56) References cited:
- EP-A- 0 903 905
- EP-A- 1 056 259
- SVANBRO K ET AL: "Wireless real-time IP services enabled by header compression" VTC2000-SPRING. 2000 IEEE 51ST VEHICULAR TECHNOLOGY CONFERENCE PROCEEDINGS (CAT. NO.00CH37026), 2000 IEEE 51ST VEHICULAR TECHNOLOGY CONFERENCE. PROCEEDINGS. VTC2000-SPRINGER, TOKYO, JAPAN, 15-18 MAY 2000, pages 1150-1154 vol.2, XP002166161 2000, Piscataway, NJ, USA, IEEE, USA ISBN: 0-7803-5718-3

## Description

### Field of the Invention

The present invention relates to IP (Internet Protocol) data communication and, more particularly, to a method of header compression context control during handover in an IP mobile data network wherein data packets are transferred comprising a header portion and an information portion.

### Background of the Invention

In present IP mobile data communications systems,'such as cel'lular and cordless radio telecommunications systems, data are exchanged in data bursts or data packets.

Besides information data, among others for addressing purposes, each data packet comprises a header portion.

The size of the packets used, that is the number of bits comprised by a data packet for transmitting information from one user to another, is heavily dominated by the size of the packet headers. For example, in a typical interactive IP telephony service, such as VoIP (Voice over Internet Protocol), the size of the IP packet header used to specify the information elements introduced by the Real time Transport Protocol (RTP), User Datagram Protocol (UDP) and IPv4 layers (i.e. IPv4/UDP/RTP) amounts 40 bytes in average. The payload of the packets, i.e. the user information data portion, may be as low as 15-20 bytes. Thus, the packet header portion may occupy up to 2/3 part of the total packet size.

In order to increase the efficiency of the data transport in terms of the amount of information data exchanged, Header Compression (HC) schemes are designed for reducing the size of the packet header portion of a data packet.

In general, the functionality of a HC scheme is based on a compression context that specifies the synchronisation between the entity that is compressing the header portion, called the header compressor, and the entity that decompresses the header portion, called the header decompressor. The compression context is defined as an operational state wherein the header compressor compresses a header portion to be transmitted and wherein the header decompressor decompresses a received header portion. Furthermore, the context may contain additional information describing a packet stream, for example. In practise, the compressor and decompressor are typically linked by a hop-by-hop or a point-to-point link.

An existing header compression scheme called CRTP (Compressed Real-time Transport Protocol) is typically compressing the 40 bytes of an average VoIP (i.e. IPv4/UDP/RTP) header portion to a minimum of two octets. This header compression scheme can not maintain the synchronisation between the compressor and decompressor when the link between them introduces a loss of one or more packets.

Another known header compression scheme called ROCCO (R0bust Checksum-based header COmpression), can compress the 40 byte average of a VoIP header portion to a minimum of 1.25 octets. In addition, ROCCO can maintain the synchronisation between the compressor and decompressor even when the link between them introduces upto 26 consecutive packet losses. ROCCO can work very efficiently in the area of interactive voice applications over third generation cellular mobile systems, such as UMTS (Universal Mobile Telecommunications System).

ROCCO is disclosed in "Wireless real-time IP services enabled by header compression", by Svanbro et al, 2000 IEEE 51st Vehicular Technology Conference Proceedings, Tokyo, Japan, 15-18 May 2000, pages 1150-1154 vol. 2, XP002166161 2000, Piscataway, NJ, USA, IEEE, USA, ISBN: 0-7803-5718-3, from which the independent claim is delimited.

In mobile cellular radio communication networks, for example, a data communication link is subjected to handover. That is the transfer of the data link from one radio channel to another. Depending on the entity that manages the transfer of the radio connections, handover can be characterised as intracell or intranode and intercell or internode handover.

The intracell or intranode handover scheme can be defined as a handover procedure wherein the transfer of the data link connection is managed by the same cell or node, that is the same radio access unit or radio base station.

The intercell or internode handover scheme is a handover procedure wherein the transfer of the data link is managed by different cells or nodes, that is different radio access units or radio base stations.

Depending on the method of establishing the new data' link connection and the release of the existing or old data link connection, the handover procedure is called hard or soft.

The hard handover procedure is defined as the handover procedure wherein the existing or old radio link is abandoned before the new radio link is established. In the soft handover procedure the existing or old radio link and the new radio link are switched in such a manner that there is always at least one radio link operative.

Typically, the hard handover procedure introduces packet losses. The number of the lost packets depends on the duration of the handover procedure. Due to the losses that occur during the period of hard handover, the compression context between the compressor and the decompressor may get out of synchronisation.

Furthermore, in both the hard and soft handover processes, in particular in the case of intercell or internode handover, the new data link connection may include a new compressor and/or decompressor, between which no compression context exists.

Accordingly, during handover, the data exchange between a transmitter and a receiver of an IP mobile data network wherein data packets are transferred using header compression mechanisms are very prone to errors and even lost of communication.

### Summary of the Invention

It is an object of the present invention to provide an improved method for maintaining header compression context during handover in an IP mobile data network wherein data packets are transferred following a header compression scheme.

It is a further object of the present invention to provide a data network transceiver, a radio access unit and a radio communication unit arranged for exchanging data packets in accordance with the improved method of the invention.

These and other objects and advantages are achieved by the present invention in a method of controlling header compression context during handover in a data exchange between a transmitter and a receiver of an IP mobile data network, wherein data packets are transferred comprising a header portion and an information portion, and wherein the transmitter comprises a header compressor and the receiver comprises a header decompressor arranged for operating in accordance with a header compression scheme, which method is characterized by the steps of:
- notifying the header compressor of the initiation of a handover;
- transmitting packets arranged for controlling the header compression context between the header compressor and header decompressor;
- notifying the header compressor of completion of the handover; and
- operating said header compressor and header decompressor in accordance with a synchronised compression context.

During normal data exchange, that is wherein there is no handover between a transmitter and receiver, the header compressor and the header decompressor operate together in accordance with their compression context. The compression context is the operational state that is used by the header compressor to compress a header and by the header decompressor to decompress a header.

In order to avoid loss of compression context, the method according to the invention transmits during the handover procedure packets which are arranged for maintaining the header compression context between the header compressor and the header decompressor. That is, the present invention anticipates on a particular loss of compression context by transmitting, during handover, packets which guarantee compression context between the header compressor and decompressor.

In a preferred embodiment of the method according to the invention, after the notification of the handover, each packet to be transmitted is arranged for initiating and synchronising the compression context between the header compressor and the header decompressor.

Thus, loss of synchronisation between the header compressor and the header decompressor due to loss of packets in the hard handover procedure is effectively repaired by the present invention in that packets are transmitted which are able to initiate and synchronise a header compression context between a header compressor and decompressor.

Also in the case of intercell or internode handover, both soft and hard, wherein the new connection may include a new header compressor and/or a new header decompressor between which no compression context yet exists, the packets transmitted in accordance with the present invention are able to maintain the compression context by initiating a header compression context between the header compressor and header decompressor of the new communication link.

Although the method according to the invention, during handover, transmits packets comprising a larger amount of bits than the compressed packets, this loss of efficiency does not diminish the advantage of a guaranteed header compression context.

The method according to the invention is not limited to a particular header compression scheme, and may be used, among others, in an IP network using CRTP or ROCCO, for example.

Dependent on a particular transmission protocol, handover may be notified from the transmitter and/or from the receiver.

In the case of a mobile radio data network operative under GSM (Global System for Mobile communications) handover is initiated from the radio base stations or radio access units. In DECT (Digital Enhanced Cordless. Telecommunications) handover is initiated, from the cordless telecommunication unit, such as a cordless telephone terminal.

The method according to the invention is of particular interest in networks wherein the information portion of the data packets comprises voice or speech data, such as VoIP, wherein the information data portion, i.e. the payload of a packet, occupies just 1/3 part of the total packet size and the other 2/3 part is occupied by the packet header portion.

The invention further provides for an IP data network transceiver, a radio access unit and a radio communication unit comprising transmitter and receiver means for exchanging data packets having a header portion and an information portion, wherein the transceiver comprises a header compressor and header decompressor arranged for operating in accordance with the method of the present invention. It is noted that:
- the invention can be applied on any IP mobile data network that uses as network protocol layer either the IP version 4 (IPv4) or the IP version 6 (IPv6);
- the IP data network transceiver can be any IP backbone entity (e.g. router) that could be used as a header compressor or header decompressor, e.g., the Radio Network Controller (RNC) used in UMTS, the Serving GPRS Support Node (SGSN) used in UMTS and in General Packet Radio Service (GPRS);
- the radio access unit can be any base station, e.g. the Base Transceiver Station (BTS) used in UMTS and in GPRS;
- the radio communication unit can be any mobile station, e.g Mobile Station (MS) used in UMTS and in GPRS.

The above-mentioned and other features and advantages of the invention are illustrated in the following description with reference to the enclosed drawings.

### Brief Description of the Drawings

Figure 1 shows, in a schematic and illustrative manner, the operation of the method according to the invention for an intracell or intranode handover.
Figure 2 shows, in a schematic and illustrative manner, the operation of the method according to the invention for an intercell or internode handover.
Figure 3 shows in a flowchart diagram the main steps of the method according to the invention.

### Detailed Description of the Embodiments

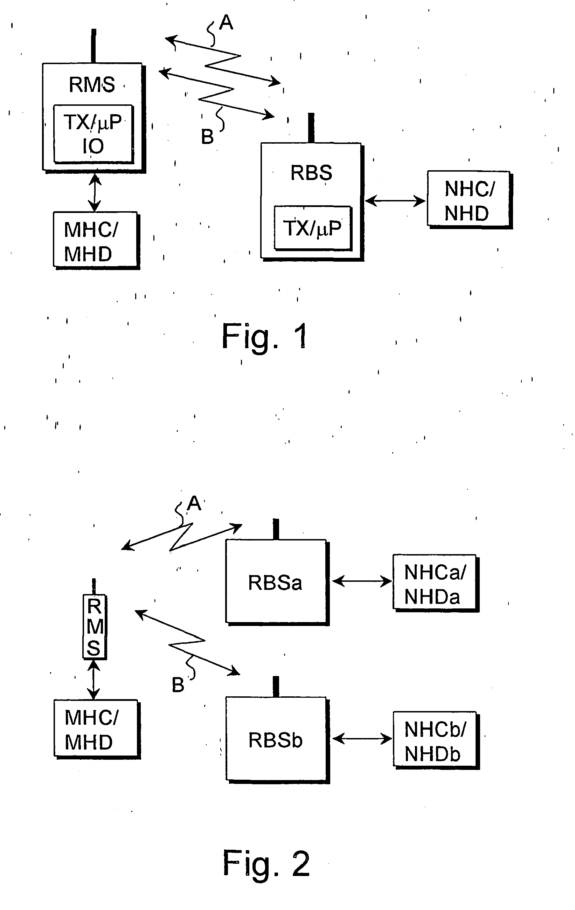

Figure 1 illustrates part of an IP (Internet Protocol) cellular mobile radio communication system, such as a radio data and telephone network operative under GSM (Global Systems for Mobile communications), DECT (Digital Enhanced Cordless Telecommunications), GPRS (General Packet Radio Service), UMTS (Universal Mobile Telecommunication System) and other protocols.

Cellular radio communication systems comprise one or a plurality of radio access units or Radio Base Stations (RBS) having transceiver TX and control means µP for providing duplex telecommunications service in a geographically limited area called a cell surrounding an RBS' (not shown).

In a typical GSM network, for example, an RBS connects through a Base Station Control (BSC) to a Mobile services Switching Centre (MSC) which performs the switching of calls between an RBS and other mobile or fixed networks, such a the PSTN (Public Switched Telephone Network), the ISDN (Integrated Services Digital Network), an IP data network such as the Internet etcetera.

For the sake of clarity, the BSC, MSC and other networks are not shown in figure 1.

In use, a radio communication unit or Radio Mobile Station (RMS) communicates via a radio air interface to the RBS providing duplex radio communications service in the area or cell at which the RMS is currently located. The RMS comprises transceiver means TX, control means µP and radio communication means 10 which, for clarity purposes, are indicated as a single block.

The RBS and RMS are arranged for IP (Internet Protocol) data communication, such as Voice over Internet Protocol (VoIP) telephony service, wherein data are transmitted in packets comprising an information portion and a header portion.

As disclosed in the introductory part of the description, the header portion may occupy upto 2/3 part of a total packet size. For increasing the efficiency of the data transport Header Compression (HC) schemes and means are designed for reducing the size of the packet header portion of a data packet during the communication over a communication link.

To this end, the RBS is provided with Network Header Compressor (NHC) and Network Header Decompressor (NHD) equipment, as shown in figure 1. Likewise, each RMS comprises Mobile station Header Compressor (MHC) and Mobile station Header Decompressor (MHD) equipment, as schematically illustrated in figure 1. The header compressor and header decompressor means may be situated in a separate hardware component and/or provided in software, e.g. in the control means µP of the RBS and RMS.

The MHC/MHD and NHC/NHD equipment may operate in accordance with any HC schema, such as CRTP (Compressed Real-time Transport Protocol) or ROCCO (RObust Checksum-based header COmpression), for example.

Both CRTP and ROCCO, during normal uninterrupted duplex use, operate in accordance with a compression context between the respective header compressor and header decompressor of an RBS and RMS between which a duplex radio communication link exists. The compression context-is defined as an operational, state wherein the header compressor and the header decompressor operate in synchronism.

CRTP and ROCCO, for example, use different compression context synchronisation processes. In CRTP, the header compression scheme initialises and synchronises the compression context by sending one packet, called FULL_HEADER. This means that for each original uncompressed packet the compressor will send one FULL HEADER packet that includes as payload the payload of the original uncompressed packet. For more details on the format of the FULL_HEADER packet reference is made to S. Casner and V. Jacobson "Compressing IP/UDP/RTP Headers for Low-Speed Serial Links", IETF RFC2508, 1999.

The ROCCO header compression sch'eme initialises the compression context by sending one packet called STATIC and synchronises the compression context by sending after the initial STATIC packet one DYNAMIC packet. This means that for each original uncompressed packet the compressor will sent subsequently one STATIC packet and one DYNAMIC packet. The STATIC packet contains the header fields that are constant trough the lifetime of the packet stream. Furthermore, this packet does not contain any payload. Each DYNAMIC packet has a header that contains all changing header fields in their original, uncompressed form. Moreover, the contained payload is similar to a payload contained in COMPRESSED packets. For more details on the format of the STATIC, DYNAMIC and COMPRESSED packets reference is made to L.-E. Jonsson, M. Dagermark, H. Hannu, K. Svanbro, "Robust Checksum-based header Compression (ROCCO)", IETF Internet draft (work in progress), March 2000.

Header compressor and header decompressor equipment for use with the present invention are known to persons skilled in the art and need no further detailed explanation.

The method according to the invention will now be disclosed for an intracell or intranode handover, with reference to figure 1.

During an intracell or intranode handover an existing radio link A between the RBS and RMS is transferred to a different radio link B, which transfer is managed by the same cell or node, that is the same RBS.

In a first step, the header compressor, either NHC or MHC or both, receives a notification that a handover procedure is initiated. In GSM, for example, handover is initiated by the RBS whereas in DECT, for example, handover is initiated by the RMS. Accordingly, dependent on the type of radio communication protocol applied, the notification that a handover procedure is initiated may be sent from the RBS to the RMS or vice versa.

After receipt of the handover notification, each packet that will be sent from the header compressor, that is MHC and/or NHC, to the header decompressor, that is NHD or MHD, is arranged to initiate and synchronise the compression context between the relevant header compressor and header decompressor. This will ensure that during the handover procedure the compression context between the header compressor and header decompressor will be maintained, i.e. synchronised.

Once the handover is completed, that is radio communication from radio link A is transferred to radio link B, the header compressor, which can be MHC and/or NHC receives a notification that the handover procedure is completed. After receipt of this notification, normal operation, that is operation when no handover occurs, for the relevant header compression scheme is resumed.

The above procedure is, in particular, applicable to hard handover wherein radio link A is terminated and radio link B is set up after termination of radio link A, which may introduce loss of packets and, accordingly, loss of synchronisation context. However, the synchronisation context between the header compressor and header decompressor is restored or repaired with the next received consecutive packet.

In an intercell or internode handover, the radio mobile station RMS moves from the coverage area of a first radio access unit or radio base station RBSa to the coverage area or cell of a second radio access unit or radio base station RBSb, as schematically illustrated in figure 2. That is, the communication link of the RMS changes from radio link A operative with RBSa to radio link B operative with RBSb.

In accordance with the invention, the header compressor, which can be MHC and/or NHCa and/or NHCb receives a notification that a handover procedure is initiated. Next, each packet that will be sent from the header compressor, which can be MHC and/or NHCa and/or NHCb to the decompressor, which can be NHDa and/or NHDb and/or MHD, is arranged to initiate and synchronise the compression context between the relevant compressor and decompressor. After completion of the handover, the header compressor, which can be MHC and/or NHCa and/or NHCb, receives a notification that the handover procedure is completed and that the normal operation of the header compression scheme may be resumed,' that is the operation wherein the header compressor and header decompressor of a radio link operate in accordance with a synchronised compression context.

In the case of a handover from RBSa to RBSb, it is preferred that all the compressors which are involved in the handover, that is MHC, NHCa and NHCb operate by transmitting packets arranged for maintaining the header compression for each of the radio communication links A and B. This, in order to have the possibility of keeping radio link A inforce if the handover to radio link B fails for one reason or another.

In the case of an intercell or internode handover, the method according to the invention is equal of advantage for soft handover and hard handover, because for the new radio link connection, i.e. radio link B in the above example, their exists no compression context between MHD and NHCb and/or MHC and NHDb.

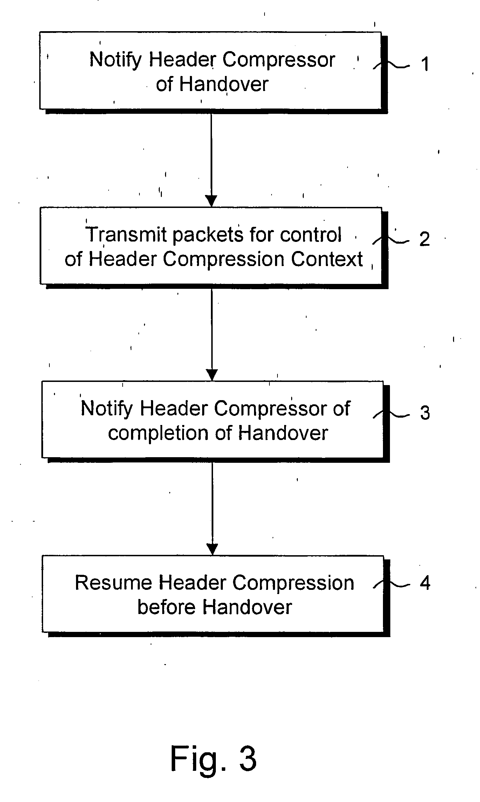

Figure 3 shows, in a flowchart diagram, the main steps of the method according to the invention between a transmitter comprising a header compressor and a receiver comprising a header decompressor.

In step 1, the header compressor of the transmitter is notified about the initiation of a handover. In reply to this notification, the header compressor transmits packets for controlling the header compression context between the header compressor and the header decompressor. In step 3, the header compressor is notified of the completion of the handover and resumes the header compression operation as during normal data exchange, i.e. not involving a handover, step 4.

Each packet to be transmitted by the header compressor during the handover is preferably arranged for initiating and synchronising the compression context between the header compressor and header decompressor.

The method according to the invention is applicable to each existing or new HC scheme, in particular an IP version 4 (IPv4) or an IP version 6 (IPv6) and CRTP or ROCCO, wherein the data packets comprise voice or speech data.

Although the invention is illustrated with reference to an IP mobile data network, it will be appreciated by those skilled in the art, that the method and equipment for controlling header compression context during handover is applicable to each data network wherein for an ongoing communication session loss of header compression context is to be avoided or repaired during a change of data link.

## Claims

1. A method of controlling header compression context during handover in a date exchange between a transmitter (RMS; RBS; RBSa; RBSb) and a receiver (RBS; RBSa; RBSb; RMS) of an IP mobile data network, wherein data packets are transferred comprising a header portion and an information portion, said transmitter (RMS; RBS; RBSa; RBSb) comprising a header compressor (MHC; NHC; NHCa; NHCb) and said receiver (RBS; RBSa; RBSb; RMS) comprising a header decompressor (NHD; NHDa; NHDb; MHD) arranged for operating in accordance with a header compression scheme, **characterized by** the steps of:
- notifying said header compressor (MHC; NHC; NHCa; NHCb) of the initiation of a handover;
- transmitting packets arranged for controlling said header compression context between said header compressor (MHC; NHC; NHCa; NHCb) and said header decompressor (NHD; NHDa; NHDb; MHD);
- notifying said header compressor (MHC; NHC; NHCa; NHCb) of completion of said handover; and
- operating said header compressor and header decompressor in accordance with a synchronised compression context.

2. A method according to claim 1, wherein after said notification of said handover, each packet to be transmitted is arranged for initiating and synchronizing said compression context between said header compressor and said header decompressor.

3. A method according to claim 1 or 2, wherein said data network operates in accordance with either an Internet Protocol, hereinafter referred to as IP, version 4 or an IP version 6 and said header compressor (MHC; NHC; NHCa; NHCb) and header decompressor (NHD; NHDa; NHDb; MHD) operate in accordance with a header compression scheme called Compressed Real-time Transport Protocol.

4. A method according to claim 1 or 2, wherein said data network operates in accordance with either an IP version 4 or an IP version 6 and said header compressor (MHC; NHC; NHCa; NHCb) and header decompressor (MHD; NHD; NHDa; NHDb) operate in accordance with a header compression scheme called Robust Checksum-based header Compression.

5. A method according to any of the claims 1-4, wherein said handover notification is initiated from said transmitter (RMS; RBS; RBSa; RBSb).

6. A method according to any of the claims 1-4, wherein said handover notification is initiated from said receiver (RBS; RBSa; RBSb; RMS).

7. A method according to any of the claims 1-6, wherein said data network is an IP cellular radio data network.

8. A method according to any of the claims 1-7, wherein said information portion of said data packets comprises voice or speech data.

9. An IP data network transceiver (RMS; RBS; RBSa; RBSb), comprising transmitter and receiver means for exchanging data packets comprising a header portion and an information portion, said transceiver (RMS; RBS; RBSa; RBSb) comprising a header compressor (MHC; NHC; NHCa; NHCb) and a header decompressor (MHD; NHD; NHDa; NHDb) arranged for operating in accordance with the method of any of the claims 1-8.

10. A radio access unit comprising transceiver means in accordance with claim 9, for exchanging data packets in an IP cellular radio data network.

11. A radio communication unit comprising transceiver means in accordance with claim 9, for exchanging data packets in an IP cellular radio data network.

## Patentansprüche

1. Verfahren zur Steuerung des Kopfkompressionskontextes während der Übergabe in einem Datenaustausch zwischen einem Sender (RMS; RBS; RBSa; RBSb) und einem Empfänger (RBS; RBSa; RBSb; RMS) eines IP-Mobildatennetzwerks, wobei einen Kopfteil und ein Informationsteil umfassende Datenpakete übertragen werden, der Sender (RMS; RBS; RBSa; RBSb) einen Kopfkompressor (MHC; NHC; NHCa; NHCb) und der Empfänger (RBS; RBSa; RBSb; RMS) einen Kopfdekompressor (NHD; NHDa; NHDb; MHD) umfasst, welche gemäß einem Kopfkompressionsschema arbeiten, **gekennzeichnet durch** die Schritte:
- Hinweisgeben der Initiierung einer Übergabe für den Kopfkompressor (MHC; NHC; NHCa; NHCb);
- Übertragen von zur Steuerung des Kopfkompressionskontextes ausgebildeten Paketen zwischen dem Kopfkompressor (MHC; NHC; NHCa; NHCb) und dem Kopfdekompressor (NHD; NHDa; NHDb; MHD) ;
- Hinweisgeben einer Vervollständigung der Übergabe für den Kopfkompressor (MHC; NHC; NHCa; NHCb); und
- Betätigen des Kopfkompressors und des Kopfdekompressors gemäß einem synchronisierten Kompressionskontext.

2. Verfahren nach Anspruch 1, bei dem jedes zu übertragende Paket nach dem Hinweisgeben der Übergabe für eine Initiierung und Synchronisierung des Kompressionskontextes zwischen dem Kopfkompressor und dem Kopfdekompressor ausgebildet ist.

3. Verfahren nach Anspruch 1 oder 2, bei dem das Datennetzwerk gemäß entweder einem nachfolgend als IP bezeichneten Internetprotokoll, einer IP-Version 4 oder einer IP-Version 6 arbeitet und der Kopfkompressor (MHC; NHC; NHCa; NHCb) und der Kopfdekompressor (NHD; NHDa; NHDb; MHD) gemäß einem Kopfkompressionsschema arbeiten, das als komprimiertes Echtzeit-Transportprotokoll bezeichnet wird.

4. Verfahren nach Anspruch 1 oder 2, bei dem das Datennetzwerk gemäß entweder einer IP-Version 4 oder einer IP-Version 6 arbeitet und der Kopfkompressor (MHC; NHC; NHCa ; NHCb) und der Kopfdekompressor (MHD; NHD; NHDa ; NHDb) gemäß einem Kopfkompressionsschema arbeiten, das als auf Robustprüfsummen basierender Kopfkompression bezeichnet wird.

5. Verfahren nach den Ansprüchen 1 bis 4, bei dem der Übergabehinweis vom Sender (RMS; RBS; RBSa; RBSb) initiiert wird.

6. Verfahren nach den Ansprüchen 1 bis 4, bei dem der Übergabehinweis vom Empfänger (RBS; RBSa; RBSb; RMS) initiiert wird.

7. Verfahren nach den Ansprüchen 1 bis 6, bei dem das Datennetzwerk ein IP-Zellular-Radiodatennetzwerk ist.

8. Verfahren nach den Ansprüchen 1 bis 7, bei dem der Informationsteil der Datenpakete Stimmen- bzw. Sprachdaten umfasst.

9. IP-Daten-Netzwerksende-Empfangseinrichtung (RMS; RBS; RBSa; RBSb), die Sender- und Empfangsmittel zum Austausch von einen Kopfteil und einen Informationsteil umfassenden Datenpaketen umfasst, wobei die Sende-Empfangs-Einheit (RMS; RBS; RBSa; RBSb) einen Kopfkompressor (MHC; NHC; NHCa; NHCb) und einen Kopfdekompressor (MHD; NHD; NHDa; NHDb) umfasst, welche für einen Betrieb gemäß den Verfahren nach den Ansprüchen 1 bis 8 ausgebildet sind.

10. Radiozugriffseinheit umfassend
Sende-Empfangs-Einheitsmittel gemäß Anspruch 9 zum Austausch von Datenpaketen in einem IP-Zellular-Radiodatennetzwerk.

11. Radiokommunikationseinheit umfassend
Sende-Empfangs-Einrichtungsmittel gemäß Anspruch 9 zum Austausch von Datenpaketen in einem IP-Zellular-Radiodatennetzwerk.

## Revendications

1. Procédé de commande du contexte de compression d'en-tête pendant un transfert intercellulaire dans un échange de données entre un émetteur (RMS ; RBS ; RBSa ; RBSb) et un récepteur (RBS ; RBSa ; RBSb ; RMS) d'un réseau de données mobile IP, dans lequel on transfère des paquets de données comprenant une partie d'en-tête et une partie d'informations, ledit émetteur (RMS ; RBS ; RBSa ; RBSb) comprenant un compresseur d'en-tête (MHC ; NHC ; NHCa ; NHCb) et ledit récepteur (RBS ; RBSa ; RBSb ; RMS) comprenant un décompresseur d'en-tête (NHD ; NHDa ; NHDb ; MHD) conçu pour fonctionner conformément à une technique de compression d'en-tête, **caractérisé par** les étapes consistant à :
- indiquer audit compresseur d'en-tête (MHC ; NHC ; NHCa ; NHCb) le déclenchement dudit transfert intercellulaire ;
- transmettre des paquets conçus pour commander ledit contexte de compression d'en-tête entre ledit compresseur d'en-tête (MHC ; NHC ; NHCa ; NHCb) et ledit décompresseur d'en-tête (NHD ; NHDa ; NHDb ; MHD) ;
- indiquer audit compresseur d'en-tête (MHC ; NHC ; NHCa ; NHCb) l'achèvement dudit transfert intercellulaire ; et
- faire fonctionner ledit compresseur d'en-tête et ledit décompresseur d'en-tête conformément à un contexte de compression synchronisé.

2. Procédé selon la revendication 1, dans lequel, après ladite indication dudit transfert intercellulaire, chaque paquet à transmettre est configuré pour déclencher et synchroniser ledit contexte de compression entre ledit compresseur d'en-tête et ledit décompresseur d'en-tête.

3. Procédé selon la revendication 1 ou 2, dans lequel ledit réseau de données fonctionne conformément à un Protocole Internet, désigné ci-après IP version 4 ou à un Protocole IP version 6 et ledit compresseur d'en-tête (MHC ; NHC ; NHCa ; NHCb) et ledit décompresseur d'en-tête (NHD ; NHDa ; NHDb ; MHD) fonctionnent conformément à une technique de compression d'en-tête appelée Protocole de Transport Compressé en Temps Réel.

4. Procédé selon la revendication 1 ou 2, dans lequel ledit réseau de données fonctionne conformément à un Protocole IP version 4 ou à un Protocole IP version 6 et ledit compresseur d'en-tête (MHC ; NHC ; NHCa ; NHCb) et ledit décompresseur d'en-tête (MHD ; NHD ; NHDa ; NHDb) fonctionnent conformément à une technique de compression d'en-tête appelée Compression d'en-tête à base de Total de Contrôle Robuste.

5. Procédé selon l'une quelconque des revendications 1-4, dans lequel ladite indication de transfert intercellulaire est déclenchée par ledit émetteur (RMS ; RBS ; RBSa ; RBSb).

6. Procédé selon l'une quelconque des revendications 1-4, dans lequel ladite indication de transfert intercellulaire est déclenchée par ledit récepteur (RBS ; RBSa ; RBSb ; RMS).

7. Procédé selon l'une quelconque des revendications 1-6, dans lequel ledit réseau de données est un réseau de données radio cellulaire IP.

8. Procédé selon l'une quelconque des revendications 1-7, dans lequel ladite partie d'informations desdits paquets de données comprend des données de voix ou de parole.

9. Emetteur/récepteur de réseau de données IP (RMS ; RBS ; RBSa ; RBSb), comprenant des moyens émetteurs et récepteurs pour échanger des paquets de données comprenant une partie d'en-tête et une partie d'informations, ledit émetteur/récepteur (RMS ; RBS ; RBSa ; RBSb) comprenant un compresseur d'en-tête (MHC ; NHC ; NHCa ; NHCb) et un décompresseur d'en-tête (MHD ; NHD ; NHDa ; NHDb) conçus pour fonctionner conformément au procédé selon l'une quelconque des revendications 1-8.

10. Unité d'accès radio comprenant un moyen émetteur/récepteur selon la revendication 9, pour échanger des paquets de données dans un réseau de données radio cellulaire IP.

11. Unité de communication radio comprenant un moyen émetteur/récepteur selon la revendication 9, pour échanger des paquets de données dans un réseau de données radio cellulaire IP.
